# EUROPEAN PATENT APPLICATION

(11) **EP 1 386 889 A1**
(43) Date of publication of application: **04.02.2004**
(21) Application number: 02380176.4
(22) Date of filing: 02.08.2002
(51) Int. Cl.: C03B 25/06, C03B 23/20

(54) **Continuous and adjustable glass fusing process using a tunnel-furnace and the tunnel-furnace used for this process**

(71) Applicant: Esteban Hernandez, Antonio, 03400 Villena (Alicante) (ES); Hrenandez Osa, Santiago, 03400 Villena (Alicante) (ES)
(72) Inventor: Esteban Hernandez, Antonio, 03400 Villena (Alicante) (ES); Hrenandez Osa, Santiago, 03400 Villena (Alicante) (ES)
(74) Representative: Esteban Perez-Serrano, Maria Isabel

(57) **Abstract**

This invention is characterized by the construction of a furnace, divided into three broadly differentiated phases and zones; and with independence of the means of conveyance assigned to each one, in seven different stages, two of heating in the first phase, one of rapid cooling in the second phase and two others of after cooling in the third; apart from two more, whether outside the furnace or combining an additional module, until reaching ambient temperature; with a total process time of between two hours and a half and four and a half hours, as well as with different temperatures, and whose upper limit doesn't exceed 880°C.

## Description

### PURPOSE OF THE INVENTION

This invention refers to a continuous and adjustable glass fusing process using a tunnel-furnace, as well as the tunnel-furnace used for it, among the means of mutual fusing of different glass pieces.

This invention is characterized by the construction of a furnace divided into three clearly differentiated phases and zones, independently of the means of conveyance assigned to each one, and in seven different stages, two of heating in the first phase, one of rapid cooling in the second phase and two others of after cooling in third, apart from two more outside the furnace, with a total process time of between two and a half and four and a half hours, as well as at different temperatures, and whose upper limit doesn't exceed 880°C.

### BACKGROUND TO THE INVENTION

Apart from the mixtures of thick gob of different colours, the usual techniques of handling independent glass pieces, of different colours, are by leading, currently done exclusively with the modern variant of insertion of edging between the flanks of a double "T" lead beading that is cut to measure.

Similarly the tiffanys method is used, that works with copper instead of lead and now, in the last two decades, the plastic resin beading placed on the work material with the help of a graphic tracer or what is commonly known by the English word "plotter." Another technique that, contrary to the previous, doesn't require the presence of a binding beading is glass fusion.

The fusing of some glass onto other or others, internationally called "fusing" in the jargon of this industrial sector, is very well-known and its application is documented in the construction of certain multicoloured receptacles from excavations of Roman times. Once explained, from now on, in this report, said technique will be denoted by the word "fusing."

This technology, initially artisan, was recovered at the beginning of last century, and to date it has maintained a strong manual component;the changes consisting only in the technology of the application of heat to the ensemble of glass to be fused, based on using infrared furnaces (quartz) whether of the static or intermittent type.

Both the static or table furnaces and the intermittent or trolley type work with the same principle; the artisan places the small pieces of glass on the colourless or single-colour piece.

These small glass pieces have in their contact face a drop of glue in such a way that they integrate into the material the variety of colours that will define the piece to be obtained.

Similarly, a multicoloured drawing can be made on the lower colourless glass piece, and then cover it with another similar,obtaining low-relief glazing such as frames, mirrors and others, as well as three-dimensional objects, such as costume jewellery or table-top articles, such as ashtrays, also washbasins and others.

Next the table is closed or the trolley is introduced into the furnace and the quartz lamps are turned on; then having to wait until the temperature decreases gradually, in order not to create rupture stresses in the glass thus fused; while the artisan turns his attention to preparing another table or another trolley.

This technique is conditioned by the need for a completely clean energy source and with immediate response, such as electrical resistances;since the alternative use of gas dislodges the colouring powder, and also it shows an notable inertia in start-up and stoppage of the burners that affect the already complex conditions of the "fusing"in factors as critical as times, thickness of the layers, height of the resistances, relative densities, coefficients of dilation and temperatures. For this reason, in the case of gas, diesel, etc., being used, it is essential to shield the interior of the furnace in a similar way to that done with some heating boilers, only at the start of the process, to avoid powder being driven that would be to the detriment of the final product.

The applicant is unaware of the existence of processes for saving time and consumption, as well as the other advantages of the "fusing" tunnel-furnace that will be presented below.

### DESCRIPTION OF THE INVENTION

This invention, relating to a continuous and adjustable process of glass fusing using a tunnel-furnace, as well as the tunnel-furnace used for carrying it out, corresponds to the set of means of mutual fusing of a variety of different glass pieces, preferably of an ensemble of small pieces of many different colours on a colourless or single colour glass base; even though other applications are not discarded, such as the use of glass that is powdered, granulated, in flakes, etc.

This invention is characterized by the construction of a furnace in which, apart from the foregoing conventional preparation area, it has a prior loading section, immediately beside the lip of the furnace, which is appropriately lagged for these anticipated purposes with optimum thermal insulation, which is divided in three clearly differentiated phases, in which there exists not only a physical separation between these phases but also, including, the consequent means of supply of the glass trays for each one of them is independently formed.

It is made up in seven different stages, starting from this loading area.

The two first heat stages correspond to the first phase where the first of them is an initial, progressive and continuous heating zone,variable according to thickness and other dimensions of the pieces to be fused, until the glass reaches a temperature between 460°C and 500°C.

This first zone has an upper vent for venting gases when oil-filled colourings are worked with.

The first stage is followed by a second, rapid heating phase at the furnace maximum power and of notably less duration, until fusing is achieved,that takes place between a minimum of about 800°C and a maximum that doesn't exceed 880°C, requiring approximately one hour to two hours between both of them.

This double-zoned phase is followed by a single zoned one, of rapid cooling for which the furnace, to a temperature higher than that of the end of the first stage, that is, between 490°C and 550°C. In this second phase it has some upper vent baffles with a programmable degree of opening, with the aim of venting of heat during a period not greater than 10 minutes and, at the same time, of tempering before passing to the third zone.

Each of the means of conveying in the different zones of the tunnel-furnace are constructed in a such way that, as well as conventional advance, they have a stopping and reverse movement, programmable at the operative's will, according to the characteristics of each specific "fusing".

Finally and still within the furnace, it passes to the third phase, also with a duration of about one or two hours, that includes two more stages: of tempering or rest, of cooling, up to about 500°C to 550°C, in which it is maintained the time necessary according to the characteristics of the materials. The main characteristic of this stage is that a significant part of the stress of the fused material, created in the previous stage, is eliminated.

Later it enters in the second and final stage of this third phase within the tunnel-furnace, of controlled cooling, until the temperature drops to around those critical for glass, of about 480°C.

Apart from all these stages described, two more still remain, whose objective is that the product cools very slowly without implying an excessively long passage through the furnace.

To achieve this slow cooling there are two variants. In the first, now outside the furnace, the glass is placed on a refractory table with an insulating ceramic fibre or similar material, covered to achieve a cooling rate as low as possible. The second variant prolongs the final stage of the furnace with an additional module where the temperature is now controlled, establishing temperature gradients between the intake and the outlet coinciding with the difference of temperatures that it is required to obtain in this stage.

With this slow cooling ruptures are avoided and the product remains covered or shrouded until reaching a temperature of the order of, or less than 125°C, when the cover is removed according to the first variant, or it is taken outside according to second, and it passes to the final cooling stage to ambient temperature.

Following that described, the total duration of the process is not less than two and a half hours, with large fluctuations depending on the flatness or tridimensional characteristics of the finished product, as well as due to the origin, dimensions, etc, of the materials used, it being possible for this time within the tunnel-furnace to reach four and a half hours.

Notable temperature oscilaciones are also possible, depending on the different products and finishes and whose upper limit will never exceed 880°C.

### DESCRIPTION OF THE DRAWINGS

This descriptive report is supplemented by a set of drawings, illustrative and never limitative, of the preferred example of the invention.

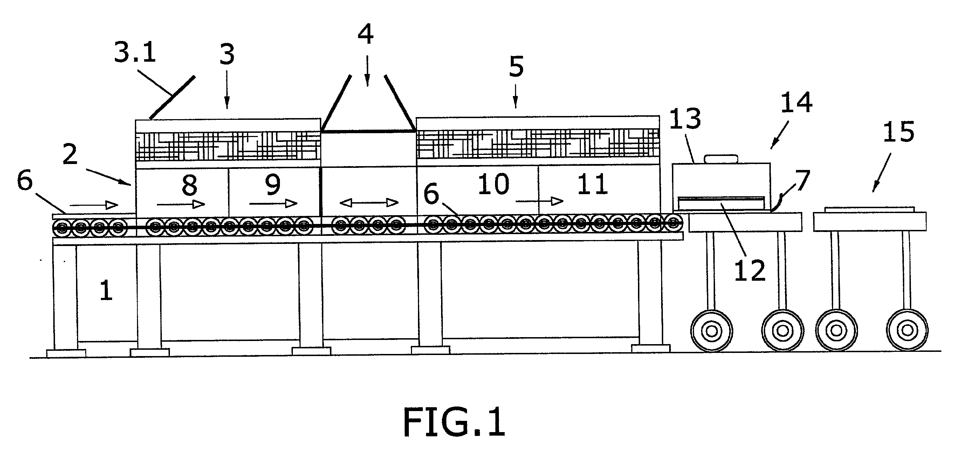

Figure 1 schematically shows the tunnel-furnace of this process making use of the refractory tables.

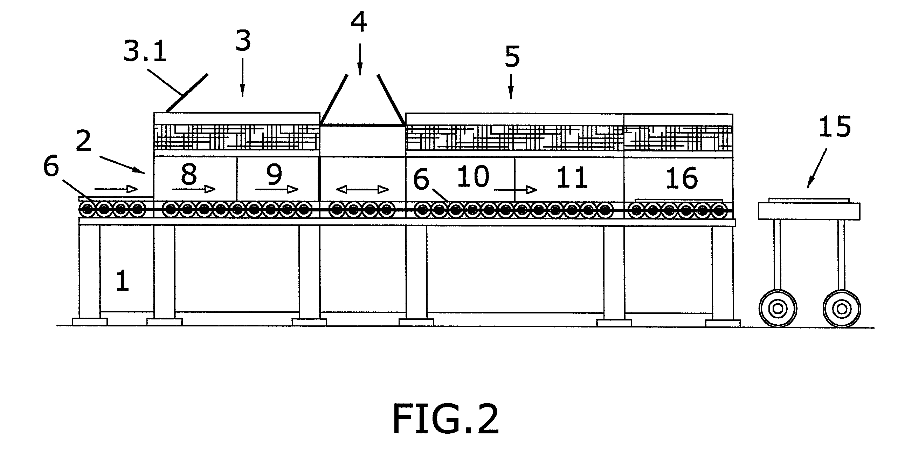

Figure 2 schematically shows the tunnel-furnace of this process with the additional cooling module.

### PREFERABLE EMBODIMENT OF THE INVENTION

This invention relates to a continuous and adjustable process of glass fusing using a tunnel-furnace, as well as the tunnel-furnace used for it,of the mutual fusing processes and furnaces of a variety of glass pieces, essentially characterized by having a continuous furnace and from the conventional material preparation zone, that includes a prior loading section (1) immediately before the lip (2) of the furnace, which is adequately lagged and divided into three phases (3), (4) and (5) conventionally separated from each other, and with different consecutive independent means (6) of supplying each one of them from the trays of glass pieces (7) or similar.

In this first phase (3), there is an upper vent baffle (3.1) placed that allows the venting of gases when oil-filled paints are used.

If it is flat glass in question, a tray (7) or lower base, such as a ceramic plate, a refractory plate, pressed fibre, sandstone, plaster or other suitable materials, in whose support surface of the glass a separator product will have been spread, so that the glass doesn't stick to the base; when moulded pieces are concerned, the suitable mould is required intermediately placed, to which the separator product will be applied, for the same purposes.

In these three consecutive phases (3), (4) and (5) of the interior of the tunnel-furnace, the products pass through five different stages, the first of initial heating (8), progressive and continuous that, in the case of the flat glass of this example, reaches a temperature of 480°C at 60 min. This is followed by the other rapid heating (9) stage, at the furnace maximum power and lasting nearly half the time, 30 min and at a temperature of between 800°C and 880°C, depending on the glass.

Next follows phase (4), with a single rapid cooling stage, with a maximum programmed degree of baffle opening, and evacuation of heat during 8 minutes approximately, as well as the means of conveyance with the necessary stoppages and reverses being programmed.

The third phase (5), with successive cooling rest stages (10) to 520°C approximately, and elimination of part of the stress and of controlled cooling (11), to 490°C; both of consecutive duration of 60 min each approximately, according to thickness and physical characteristics of the glass.

Outside of the furnace and with the fused glass placed on a refractory table (12) and under an insulating (13) cover, of ceramic fibre or similar, it passes to the very slow cooling stage (14) and without movement, until reaching a temperature of around 120°C, a time when the cover is removed and it passes to the final cooling stage (15) to ambient temperature.

The second variant that allows the use of an additional (16) cooling module maintains the fused glass on its support within this module, until also reaching a temperature of around 120°C when it will be moved to the cooling refractory tables (12), without a cover, until reaching ambient temperature.

Variations in materials, shapes, size and layout of the component parts, described in a non-limiting way, do not alter the essential nature of this invention, this being sufficient for its reproduction to be undertaken by an expert.

## Claims

1. Continuous and adjustable glass fusing process using a tunnel-furnace, of the mutual fusing furnaces and processes of a variety of glass pieces. It is essentially **characterised by** having a continuous furnace and from the conventional preparation area of the material, that includes a prior loading section (1), immediately before the lip (2) of the furnace, which is adequately lagged and divided into three phases (3), (4) and (5) conventionally separated from each other; the first (3) with an upper baffle (3.1) for venting of gases,and with various independent consecutive means (6) of supplying each of them from the glass pieces trays (7) or similar. These phases are divided into five different stages, and a sixth stage, of very slow cooling (14) without movement, until reaching a temperature of around 120°C, when uncovered and without any protection it passes to the seventh and final stage, (15) of cooling to ambient temperature.

2. Continuous and adjustable glass fusing process using a tunnel-furnace, according to the first claim; characterised because the first stage is of initial heating (8), progressive and continuous; followed by the other stage, of quite shorter duration, of rapid heating (9) at the maximum furnace power, and until the glass pieces reach their fusing temperature.

3. Continuous and adjustable glass fusing process using a tunnel-furnace, according to the first claim; characterised because the following phase (4), has a single stage, of rapid cooling of the fused glass, with a variable and programmed degree of opening of the baffles (16), and evacuation of heat during about 8 minutes; as well as the corresponding means of conveyance also being programmed, whether advancing, with stoppages or with reverse movements.

4. Continuous and adjustable glass fusing process using a tunnel-furnace, according to the first claim; characterised because the third and final phase (5) within the tunnel-furnace has two successive cooling rest stages (10), and of elimination of part of the stress and of controlled cooling (11), to near the critical temperature of the glass, both of similar duration.

5. Tunnel-furnace for a continuous and adjustable glass fusing process, according to the first claim; characterized because the furnace, appropriately lagged, has a prior loading section (1) and is divided into three phases (3), (4) and (5) separated from each other and formed by five different stages; as well as having different consecutive independent means (6) of supply to each one of these phases (3), (4) and (5) from the glass pieces trays (7) or similar. Likewise the phases (3), and (5) being divided into two stages, the (8), (9), (10) and (11) respectively, and two other stages (14) and (15) existing for cooling to ambient temperature.

6. Tunnel-furnace for fusing glass in a continuous and adjustable process, according to the fifth claim; characterized because after the final phase (5) of the furnace, the cooling stage (14) is carried out outside of the furnace, the fused glass being kept on a refractory table (12) under an insulating cover (13); and the final stage (15), without the cover, allows cooling to ambient temperature.

7. Tunnel-furnace for glass fusing in a continuous and adjustable process, according to the fifth claim; characterized because after the final phase (5) of the furnace, the cooling phase (14) is carried out in an additional module of the furnace, (16) of slow cooling; and the final stage (15), without the cover allows cooling to ambient temperature.

8. Tunnel-furnace for fusing glass in a continuous and adjustable process, according to the first claim; characterized because, in the case of fusing of flat glass pieces, a tray (7) or lower base such as a ceramic plate, a refractory plate, of pressed fibre, sandstone, plaster or other suitable materials, is available, in whose support surface for the glass a separating product will have been spread, so that the glass doesn't stick to the base.

9. Tunnel-furnace for glass fusing in a continuous and adjustable process, according to the first claim; characterised because, in the case of moulded pieces, the appropriate mould, to which the separating product will be applied, for the same purposes, is intermediately positioned.
